# EUROPEAN PATENT SPECIFICATION

(11) **EP 2 123 958 B1**
(45) Date of publication and mention of the grant of the patent: **19.12.2012**
(21) Application number: 09006207.6
(22) Date of filing: 07.05.2009
(51) Int. Cl.: F16L 11/127, F16L 11/15, F16L 57/06, F16L 11/112, F16L 11/118, F16L 11/16, F16L 11/24

(54) **Highly wear resistant electrostatic charge dissipating tube**
Elektrostatisches Ladungsverteilungsrohr mit hoher Abnutzungsbeständigkeit
Tube de dissipation de charge électrostatique hautement résistant à l'usure

(30) Priority: 23.05.2008 IT MI20080960
(43) Date of publication of application: 25.11.2009
(73) Proprietor: Merlett Tecnoplastic S.p.A., 21020 Daverio VA (IT)
(72) Inventor: Tamborini, Ariberto, 21020 Daverio VA (IT)
(74) Representative: Cicogna, Franco

(56) References cited:
- EP-A1- 1 557 257
- EP-B1- 1 117 958
- WO-A1-2004/080693
- US-A- 3 919 026

## Description

### BACKGROUND OF THE INVENTION

The present invention relates to a tube having a very high wear resistance and being adapted to allow electrostatic charges or currents to be dissipated.

As is known, prior tubes or pipes for conveying fluid substances therethrough generally comprise a continuous strip, of a hot extruded plastics material, which is wound on a pulling mandrel, thereby forming the desired tube or pipe, said tube being typically made of two different types of materials having mutually different mechanical characteristics.

In a typical arrangement, the strip comprises a main flexible plastics material construction, usually of PVC, in the inside of which a stiffening spiral or coil assembly, having a variable configuration, and made of a rigid plastics material, usually, though not exclusively, comprising PVC is arranged.

On the outside of the tube is frequently arranged a further continuous spiral or coil arrangement, made of an anti-wear plastics material which, usually, but not exclusively, comprises a polyurethane.

Other prior solutions provide to apply, inside the tube, an inner layer made of a conductive material, designed for dissipating electrostatic charges generated because inevitable frictions occurre on the tube inner surface.

WO 2004/080693 A1 shows another tube according to the preamble of claim 1.

However, the above mentioned solutions of the prior art encounter very high difficulty to remove the electrostatic charges, since it is necessary to perform a specifically designed electric connection to discharge the electrostatic charges to the outer environment.

### SUMMARY OF THE INVENTION

Accordingly, the aim of the present invention is to overcome the above mentioned problem, by providing a highly wear resistant electrostatic charge dissipating tube, which is adapted to greatly simplify the connection of the electrically conductive material inner layer to the outside environment.

Within the scope of the above mentioned aim, a main object of the invention is to provide such a tube which has very high anti-wear resistant characteristics, together with a tube construction adapted to be very easily made.

Another object of the present invention is to provide such a tube which, owing to its specifically designed constructional characteristics, is very reliable and safe in operation.

Yet another object of the present invention is to provide a highly wear resistant electrostatic charge dissipating tube which can be easily made, starting from easily available elements and materials and which, moreover, is very competitive from a mere economic standpoint.

According to the present invention, the above mentioned aim and objects, as well as yet other objects, which will become more apparent hereinafter, are achieved by a wear and abrasion resistant electrostatic charge dissipating tube made from a strip element (2) which is wound with a spiral pattern or configuration on a winding mandrel, thereby providing the desired tube by mutually arranging with an adjoining relationship strip element turns, wherein said strip element (2) has a substantialty lozenge cross-section, with a strip main body (10) made of a flexible PVC, in which is embedded a reinforcing coil (11) including a plurality of coil turns each having a turn bottom and a turn top and being made of a rigid PVC, said strip element (2) comprises an inner layer bottom portion (12) made of an abrasion resistant and electrically conductive plastics material, characterized in that said inner layer bottom portion (12) having a flat inner surface contacting said coil turn bottoms, that said inner layer bottom portion (12) is integral with a slanted layer side portion (13) having a top curved dome portion (14) defining an inner convex surface contacting said coil turn tops thereby providing the tube with abrasion resistant outer and inner surfaces, and that said integral inner portion (12) and slanted portion (13) converge into a vertex point therefrom extends an internal lug (15) providing an electrical continuity with the tube inner surface, thereby said tube has a substantially high strength ribbed electrically conductive and abrasion resistant outer surface and a substantially smooth and continuous electrically conductive and abrasion resistant inner surface.

### BRIEF DESCRIPTION OF THE DRAWINGS

Further characteristics and advantages of the present invention will become more apparent hereinafter from the following detailed disclosure of a preferred, though not exclusive, embodiment of a highly wear resistant electrostatic charge dissipating tube, which is illustrated, by way of an indicative, but not limitative, example in the accompanying drawings, where:

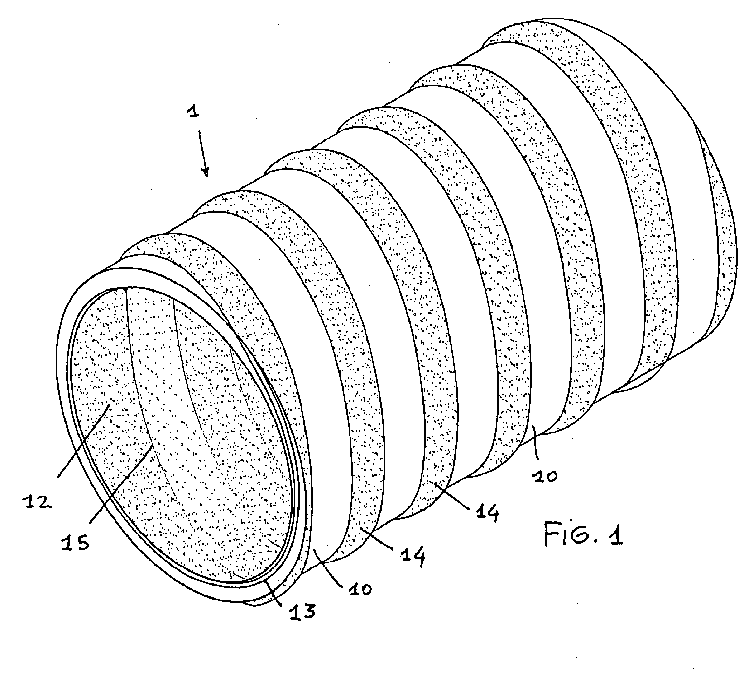

Figure 1 is a schematic perspective view, partially broken-away, of the tube according to the present invention except the substantially lozenge cross-section;

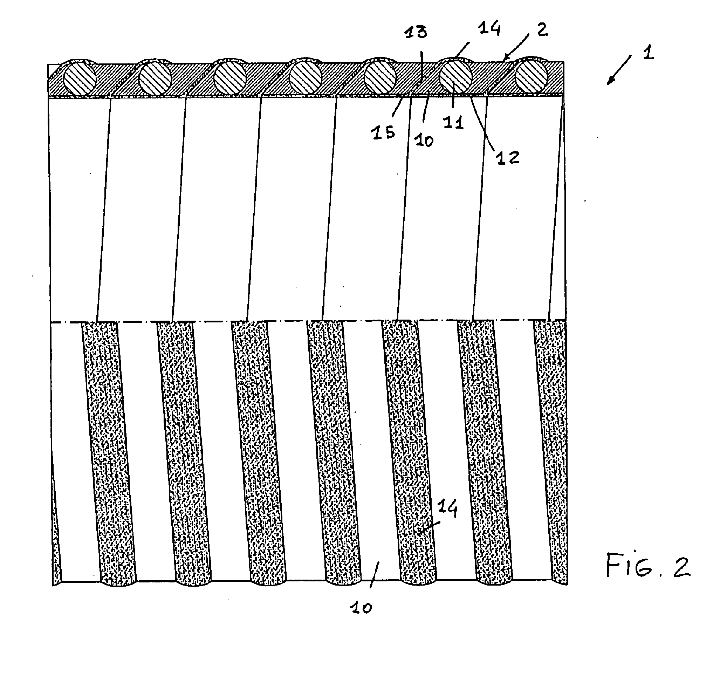

Figure 2 shows a cross-sectional view of the tube according to the present invention except the substantially lozenge cross-section; and
Figure 3 shows, in a further cross-section view, the strip element for making the inventive tube.

### DESCRIPTION OF THE PREFERRED EMBODIMENTS

With reference to the number references of the above mentioned figures, the highly wear resistant electrostatic charge dissipating tube according to the present invention, which has been generally indicated by the reference number 1, is made by starting, in a per se known manner, from a strip element 2 which is wound with a spiral pattern or configuration on a winding mandrel, thereby providing the desired tube by mutually arranging with an adjoining relationship the strip element turns.

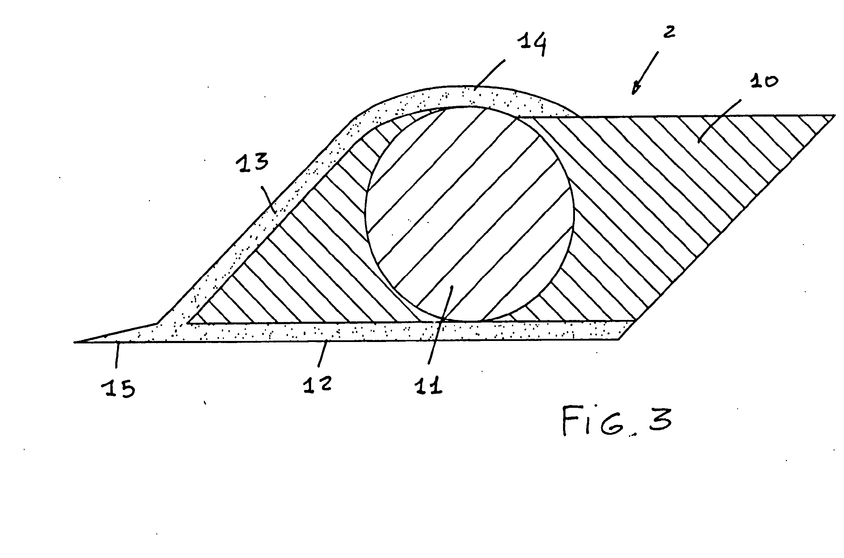

More specifically, the strip element 2, as is better shown in figure 3, has, in its cross-section, a substantially lozenge configuration, with a main body 10 which is constituted by a flexible PVC, and in which is embedded a coil or spiral pattern 11, made of a mainly rigid PVC.

The main feature of the invention is that the strip element 2 comprises an inner portion 12 made of an anti-abrading and electrically conductive plastics material.

Said inner portion 12 is connected to a slanted portion 13 overlapping the outer side of a dome portion 14, at a region thereof where is provided the stiffening or reinforcement spiral arrangement, thereby providing an outside anti-abrading protection.

Moreover, at the converging point or vertex of the inner portion 12 and the slanted portion 13 extends a lug 15 practically operating as an overlapping element to provide continuity on the inner layer.

The used plastics material is so designed as to fully dissipate to the ground or earth the electric currents and, in particular, has a surface resistance which is less than 10⁴ Ω.

Thus, after having wound the profiled element on the pulling and winding mandrel, a tube will be provided having anti-abrading and electrically conductive plastics material outer portions having a spiral arrangement and providing a physical continuity between the tube inner layer and outer layer through the overall length of the tube itself.

A main very important advantage of the invention is that each point of the tube contacts the electrically conductive material and, accordingly, electrostatic charges are safely prevented from accumulating.

The tube, in particular, can be independently fitted by fitting sleeves arranged inside the tube, or by metal bands clamped on the tube outer wall and, if these elements are firmly coupled to the ground or earth through an electrical type of connection, then the fitting-tube system will be adapted to efficiently dissipate, in a complete and safe manner, the surface currents through the overall length of the tube.

This feature is such as to render the subject tube particularly suitable for all those environments in which an accumulation of electrostatic charges, generated by a friction of abrading materials, and other dry materials such as cements, carbon, mineral materials and the like would be very dangerous.

In the inventive tube, generated electrostatic charges or currents cannot accumulate on the inner or outer surfaces of the tube owing to the physical continuity of the conductive layer.

From the above disclosure it should be apparent that the invention fully achieves the intended aim and objectives.

In particular, a novel type of tube has been provided, in which possible electrostatic charges are immediately discharged to the ground, since on both the inside and the outside of the electrically conductive material layer a physical surface continuity is provided.

Another important aspect of the invention is that the absence of electric charges prevents any materials from adhering which, in the time, could clog the tube, and contaminate by dirt the tube outer surface.

The invention, as disclosed, is susceptible to several modifications and variations, all of which will come within the invention scope, limited only by the pending claims.

Moreover, all the constructional details can be replaced by other technically equivalent elements.

In practicing the invention, the used materials, provided that they are compatible to the intended application, as well as the contingent size and shapes, can be any, according to requirements.

## Claims

1. A wear and abrasion resistant electrostatic charge dissipating tube made from a strip element (2) which is wound with a spiral pattern or configuration on a winding mandrel, thereby providing the desired tube by mutually arranging with an adjoining relationship strip element turns,
wherein said strip element (2) has a substantially lozenge cross-section, with a strip main body (10) made of a flexible PVC, in which is embedded a reinforcing coil (11) including a plurality of coil turns each having a turn bottom and a turn top and being made of a rigid PVC said strip element (2) comprises an inner layer bottom portion (12) made of an abrasion resistant and electrically conductive plastics material, **characterized in that** said inner layer bottom portion having a flat inner surface contacting said coil turn bottoms, that said inner layer bottom portion (12) is integral with a slanted layer side portion (13) having a top curved dome portion (14) defining an inner convex surface contacting said coil
turn tops thereby providing the tube with abrasion resistant outer and inner surfaces, and that said integral inner portion (12) and slanted portion (13) converge into a vertex point therefrom extends an integral lug (15) providing an electrical continuity with the tube inner surface, thereby said tube has a substantially high strength ribbed electrically conductive and abrasion resistant outer surface and a substantially smooth and continuous electrically conductive and abrasion resistant inner surface.

2. A tube according to claim 1, **characterized in that** said abrasion resistant electrically conductive plastics material has a surface resistance less than 10⁴ ohms.

## Patentansprüche

1. Verschleiß- und abriebfestes, elektrostatische Ladung ableitendes Rohr, das aus einem Streifenelement (2) hergestellt ist, welches mit einem spiralförmigen Muster oder einer spiralförmigen Konfiguration auf einen Wickeldorn gewickelt ist, wobei das gewünschte Rohr bereitgestellt wird, indem Streifenelementwindungen zueinander in einer aneinanderstoßenden Beziehung angeordnet werden, wobei das Streifenelement (2) einen im Wesentlichen rhombischen Querschnitt aufweist, mit einem Streifenhauptkörper (10), der aus einem flexiblen PVC hergestellt ist, in welches eine Verstärkungsspule (11) eingebettet ist, die mehrere Spulenwindungen aufweist, die jeweils eine Unterseite und eine Oberseite aufweisen und aus einem starren PVC hergestellt sind, wobei das Streifenelement (2) einen inneren unteren Schichtabschnitt (12) umfasst, der aus einem abriebfesten und elektrisch leitenden Kunststoffmaterial hergestellt ist, **dadurch gekennzeichnet, dass** der innere untere Schichtabschnitt eine flache Innenfläche aufweist, welche die Spulenwindungs-Unterseiten kontaktiert, dass der innere untere Schichtabschnitt (12) einstückig mit einem geneigten seitlichen Schichtabschnitt (13) verbunden ist, der einen oberen gekrümmten Kuppelabschnitt (14) aufweist, der eine konvexe Innenfläche definiert, welche die Spulenwindungs-Oberseiten kontaktiert, wodurch das Rohr mit einer abriebfesten Außen- und einer abriebfesten Innenfläche versehen wird, und dass der innere Abschnitt (12) und der geneigte Abschnitt (13), die einstückig verbunden sind, in einem Scheitelpunkt zusammenlaufen, von wo aus sich eine einstückig daran angeformte Nase (15) erstreckt, die eine elektrische Verbindung mit der Rohrinnenfläche gewährleistet, wodurch das Rohr eine im Wesentlichen hochfeste, gerippte, elektrisch leitende und abriebfeste Außenfläche und eine im Wesentlichen glatte und durchgehende, elektrisch leitende und abriebfeste Innenfläche aufweist.

2. Rohr nach Anspruch 1, **dadurch gekennzeichnet, dass** das abriebfeste, elektrisch leitenden Kunststoffmaterial einen Oberflächenwiderstand aufweist, der kleiner als 10⁴ Ohm ist.

## Revendications

1. Tube de dissipation de charge électrostatique résistant à l'abrasion et à l'usure obtenu à partir d'un élément plat (2) enroulé selon un motif ou une configuration spiralé(e) sur un mandrin d'enroulement, formant de ce fait le tube souhaité par agencement mutuel avec des spires d'élément plat en relation jointive dans lequel ledit élément plat (2) possède une coupe sensiblement rhombiforme avec un corps principal plat (10) en PVC flexible, dans lequel est intégrée une bobine de renforcement (11) comprenant une pluralité de spires d'enroulement vers le haut et vers le bas en PVC rigide, ledit élément plat (2) comprend une partie inférieure de la couche interne (12) en matière plastique résistante à l'abrasion et électriquement conductrice, **caractérisé en ce que** ladite partie inférieure de la couche interne ayant une surface interne plate en contact avec lesdites spires vers le bas, que ladite partie inférieure de la couche interne (12) est solidaire d'une partie latérale à couche inclinée (13) ayant une partie supérieure en forme de dôme incurvée (14) définissant une surface convexe interne en contact avec lesdites spires vers le haut, formant de ce fait le tube avec des surfaces interne et externe résistant à l'abrasion, et que ladite partie interne solidaire (12) et la partie inclinée (13) convergent en un point de sommet, se prolongeant par une patte solidaire (15) assurant une continuité électrique avec la surface interne du tube, ledit tube ayant de ce fait une surface externe ondulée à haute résistance électriquement conductrice et résistant à l'abrasion, et une surface interne sensiblement lisse, électriquement conductrice en continu et résistant à l'abrasion.

2. Tube selon la revendication 1, **caractérisé en ce que** ladite matière plastique électriquement conductrice et résistant à l'abrasion possède une résistance de surface inférieure à 10⁴ ohms.
